# EUROPÄISCHE PATENTANMELDUNG

(11) **EP 1 125 788 A1**
(43) Veröffentlichungstag der Anmeldung: **22.08.2001**
(21) Anmeldenummer: 01103221.6
(22) Anmeldetag: 12.02.2001
(51) Int. Cl.: B60N 2/46

(54) **Armauflage für einen Sitz**

(30) Priorität: 11.02.2000 DE 10006075
(71) Anmelder: Schwab Technik GmbH, 81477 München (DE)
(72) Erfinder: Schwab, Günther, 82061 Neuried (DE); Schmidt, Christian, 82152 Planegg (DE)
(74) Vertreter: Konnerth, Dieter Hans

(57) **Zusammenfassung**

Die Erfindung betrifft Armauflage (10), für einen Sitz, insbesondere Fahrzeugsitz, die seitlich an einem Sitzteil oder an einem benachbarten Fahrzeugteil angeordnet ist. Zur Verbesserung einer Einstellbarkeit einer ergonomischen Sitzposition ist erfindungsgemäß eine motorisch betätigbare Verstelleinrichtung (16, 17, 48, 49) zur Veränderung der Position der Armauflage (10) relativ zum Sitzteil oder Fahrzeugteil vorgesehen.

## Beschreibung

Die Erfindung betrifft eine Armauflage für einen Sitz, insbesondere einen Fahrzeugsitz, die seitlich an einem Sitzteil oder an einem benachbarten Fahrzeugteil angeordnet ist.

Fahrzeugfahrersitze und üblicherweise auch Beifahrersitze sind in vielfältiger Weise an die Größe eines Sitznutzers anpaßbar. So sind beispielsweise Maßnahmen bekannt, den Fahrzeugsitz parallel zur Fahrzeuglängsmittenachse in unterschiedlichen Positionen anordnen zu können. Zu diesem Zweck ist der Fahrzeugsitz in Führungsschienen verschiebbar. Ferner ist die Rückenlehne des Fahrzeugsitzes bezüglich ihrer Neigung einstellbar. Außerdem ist es bekannt, den Fahrersitz in seiner Höhe und/oder Neigung einzustellen. Sämtliche dieser Einstellvorgänge erfolgen entweder manuell mittels Stellhebeln oder servobetätigt mittels aus dem Bordnetz gespeister Elektromotoren. Für die Armauflagen sind verschiedene Anbringungsarten vorgesehen. Beispielsweise ist es bekannt, die Armauflage zwischen den beiden Vordersitzen des Fahrzeugs oder an den Türverkleidungen feststehend anzubringen. Bei dieser Anbringungsart folgt die Armauflage naturgemäß den Stellbewegungen der Sitze nicht. Alternativ hierzu ist es bekannt, die Armauflage bzw. beidseits des Sitzes vorgesehene Armauflagen fest mit einem Tragrahmen des Sitzteils zu verbinden. In diesem Fall folgt die Armauflage ausschließlich der Längsverstellung des Sitzes. Ergänzend hierzu kann die Armauflage am rückwärtigen Ende schwenkbar angelenkt und damit hochklappbar sein. In jedem der genannten Fälle besteht das Problem, daß sich die Armauflage nicht in der optimalen Position für den Nutzer des jeweiligen Sitzes befindet, d.h. insbesondere zu hoch oder zu niedrig angeordnet ist. Diese Problemstellung besteht prinzipiell auch für Sitzmöbel im Wohn- oder Bürobereich.

Angesichts dieses Standes der Technik liegt der Erfindung die Aufgabe zugrunde, eine Armauflage der eingangs genannten Art zu schaffen, die eine entspannte Nutzung eines Sitzes ungeachtet der Größe des Nutzers erlaubt.

Gelöst wird diese Aufgabe durch die Merkmale des Anspruchs 1. Vorteilhafte Weiterbildungen der Erfindung sind in den Unteransprüchen angegeben.

Demnach sieht die Erfindung eine Einstellbarkeit der Armauflage bezüglich eines Sitzteils oder Fahrzeugteils mittels einer motorisch betätigbaren Verstelleinrichtung vor. Aufgrund dieser Maßnahme ist der Sitz auch bezüglich der Armauflage bequem optimal an die Größe und die Bedürfnisse eines Sitznutzers anpaßbar. Bei Sitzen mit einer sogenannten Memory-Funktion können die Armauflagen an die individuell vorteilhafteste Sitzposition eines bestimmten Benutzers entsprechend eines entsprechenden Code-Signals (beispielsweise von einer Auswahltaste, einem Fahrzeugschlüssel oder einer anderweitigen Nutzer-Erkennung (z.B. Spracherkennung, Fingerabdruck oder ähnliches) angepaßt werden.

Grundsätzlich ist für eine Einstellbarkeit der Armauflagen jede Relativbewegung der Armauflagen bezüglich des Sitzteils (Sitzfläche und/oder Lehne) geeignet. Die Bewegung kann linear oder rotatorisch oder auf einer Kurvenbahn erfolgen. Sie kann zur Höhen- und/oder Neigungsverstellung ebenso wie zur Veränderung des seitlichen Abstandes verwendet werden.

Bevorzugt kommt zur erfindungsgemäßen Höheneinstellung der Armauflage eine beliebige Hubeinrichtung in Betracht, solange diese gewährleistet, daß die Armauflage in der gewünschten Neigung zuverlässig höheneinstellbar ist. In Betracht kommt hierzu beispielsweise eine mittig unter der Armauflage angeordnete Hubeinrichtung, wie beispielsweise eine Spindel, zur Höheneinstellung derselben. Eine derartige Hubeinrichtung erfordert jedoch eine beträchtliche Stabilität, da die Armauflage nicht stets zentral sondern auch außermittig belastet wird. Vorteilhafterweise ist deshalb vorgesehen, daß die Hubeinrichtung zwei in Längserstreckungsrichtung der Armauflage beabstandete Hubmittel umfaßt, welche die notwendige Stabilität bei der Belastung der Armauflage durch eine Zwei-Punkt-Lagerung stets gewährleisten. Generell ist jedoch auch ein Hubmittel mit einer Führungssäule oder Zahnstange möglich.

Die Verwendung von zwei Hubmitteln für die Hubeinrichtung hat auch den Vorteil, daß bei einem asynchronen Antrieb dieser beiden Hubmittel die Neigung der Armauflage gegebenenfalls relativ einfach eingestellt werden kann.

Falls eine Neigungseinstellbarkeit der Armauflage zusätzlich zur Höheneinstellbarkeit nicht erforderlich ist, werden die beiden Hubmittel der Hubeinrichtung vorteilhafterweise synchron angetrieben.

Grundsätzlich kann zur Neigungsverstellung der Armauflage auch ein eigener, von der Höheneinstellung unabhängiger Antrieb vorgesehen sein, der beispielsweise auf die gemeinsame Basis der beiden Hubmittel einwirkt und diese in der gewünschten Weise kippt.

Die beiden Hubmittel können vollständig unabhängig voneinander und von jeweils einem eigenen Antriebsmotor angetrieben sein. Vorteilhafterweise ist jedoch zur Kosteneinsparung ein gemeinsamer Antriebsmotor für beide Hubmittel vorgesehen und dieser Antriebsmotor ist über geeignete Übertragungsmittel mit den Hubmitteln verbunden.

Gemäß einer vorteilhaften Variante der Erfindung sind die beiden Hubmittel der Hubeinrichtung als Teleskopspindeln ausgelegt, die durch Drehverstellung mittels Antriebsmotor bzw. Antriebsmotoren ein- und ausfahrbar sind und gegebenenfalls auch eine Kippverstellung der Armauflage durch asynchronen Antrieb oder unterschiedliche Gewindegänge erlauben.

Für den Fall, daß, wie vorstehend erläutert, in vorteilhafter Weise ein gemeinsamer Antriebsmotor für beide Hubmittel vorgesehen ist, ist dieser im Fall der Teleskopspindeln bevorzugt zwischen diesen angeordnet. Gemäß einer vorteilhaften Variante erfolgt die Kraftübertragung vom Antriebsmotor auf die Teleskopspindeln bei horizontal positioniertem Elektromotor und beidendig von diesem vorstehender Antriebswellen durch Schnecken, die an den Antriebswellenenden angebracht sind, und im Kämmeingriff mit außen verzahnten Antriebsrädern der Teleskopspindeln stehen. Alternativ hierzu kommt vorteilhafterweise zur Kraftübertragung ein Zahnriemen in Betracht, der von einem vertikal angeordneten Antriebsmotor beaufschlagt ist und in Kämmeingriff mit außen verzahnten Antriebsrädern der Teleskopspindeln steht. Die beiden Antriebsarten unter Verwendung einer Schnecke oder eines Zahnrads bzw. eines Zahnriemens können alternativ auch kombiniert sein, so daß der Motor mit der Schnecke bzw. dem Zahnrad die eine Teleskopspindel und mittels des Zahnriemens die andere Teleskopspindel antreibt.

Die Erfindung ist jedoch keineswegs auf Hubmittel in Gestalt von Teleskopspindeln beschränkt. Vielmehr kommt auch in Betracht, das jeweilige Hubmittel in Gestalt eines motorbetätigten Hebelmechanismus auszulegen. In diesem Fall sind vorteilhafterweise für die Extrempositionen des Hubmittels Arretiermaßnahmen vorgesehen, damit der Antriebsmotor bzw. damit die Antriebsmotoren über die Hebelmechanismen sowie auch diese nicht unnötig belastet werden, wenn die Armauflage bestimmungsgemäß genutzt wird. Dieses Arretiermittel ist bevorzugt so ausgelegt, daß es eine mechanische Verriegelung in der jeweiligen minimalen und maximalen Hubposition bereitstellt und motorbetätigt eine Lösung der Verriegelung gewährleistet.

Unter Nutzung eines derartigen Hebelmechanismus als Hubmittel, wobei bevorzugt wiederum zwei Hubmittel vorgesehen sind, umfaßt jeder Hebelmechanismus einen Stellhebel, der mit einem Ende an der Unterseite der Armauflage und mit dem anderen Ende über einen Antriebsmotor an einem Schlitten drehbar angelenkt ist, der in einer parallel zur Armauflage verlaufenden Führungsschiene geführt ist, und einen Stützhebel, der mit einem Ende an der Armauflage in der Längserstreckungsrichtung verschiebbar und mit dem anderen Ende an einem weiteren in der Führungsschiene geführten Schlitten drehbar angelenkt ist, wobei Riegel vorgesehen sind, die schwenkbar mit den Stellhebeln der beiden Hebelmechanismen verbunden sind und diese in der maximalen Hubposition an den Schlitten festsetzen, und wobei in der Armauflage Anschläge vorgesehen sind, an welchen sich die Stützhebel in der minimalen Hubposition abstützen.

Generell ist der Begriff "Hubmittel" nicht auf eine Vorrichtung zum Anheben einer Armstütze begrenzt; es sind davon auch Vorrichtungen zur Verstellung der Neigung in Längs- und/oder Querrichtung der Armstütze umfaßt. Diese können völlig separat antreibbar sein oder mit Antrieben zum Heben oder senken der Armstützen gekoppelt sein, um ergonomisch bevorzugte Stützpositionen anzufahren.

Nachfolgend wird die Erfindung anhand der Zeichnung beispielhaft näher erläutert; es zeigt:
- Fig. 1: eine Längsschnittansicht einer mit einer Hubeinrichtung versehenen Armauflage eines Fahrzeugsitzes gemäß einer ersten Ausführungsform entlang der Linie A-A von Fig. 2,
- Fig. 2: eine Ansicht der Anordnung von Fig. 1 entlang der Linie B-B,
- Fig. 3: eine Ansicht einer weiteren Ausführungsform einer Hubeinrichtung, wobei die Armauflage, zu deren Verstellung sie bestimmt ist, nicht dargestellt ist,
- Fig. 4: eine Längsschnittansicht einer Anordnung mit einer Hubeinrichtung gemäß Fig. 3, bei der die Armauflage im linken Teil in abgesenkter und im rechten Teil der Figur in angehobener Position gezeigt ist,
- Fig. 5: eine Stirnseitenansicht der Anordnung aus Armauflage und Hubeinrichtung in abgesenkter Position entsprechend dem linken Teil der Fig. 4,
- Fig. 6: eine Stirnseitenansicht der Anordnung aus Armauflage und Hubeinrichtung in angehobener Position entsprechend dem rechten Teil der Fig. 4,
- Fig. 7: eine weitere Ausführungsform einer Hubeinrichtung für eine Armauflage in maximal angehobener Position,
- Fig. 8: die Anordnung von Fig. 7 in abgesenkter Position, und
- Fig. 9: eine schematische Querschnittsansicht durch eine weitere Alternative einer Hubeinrichtung.

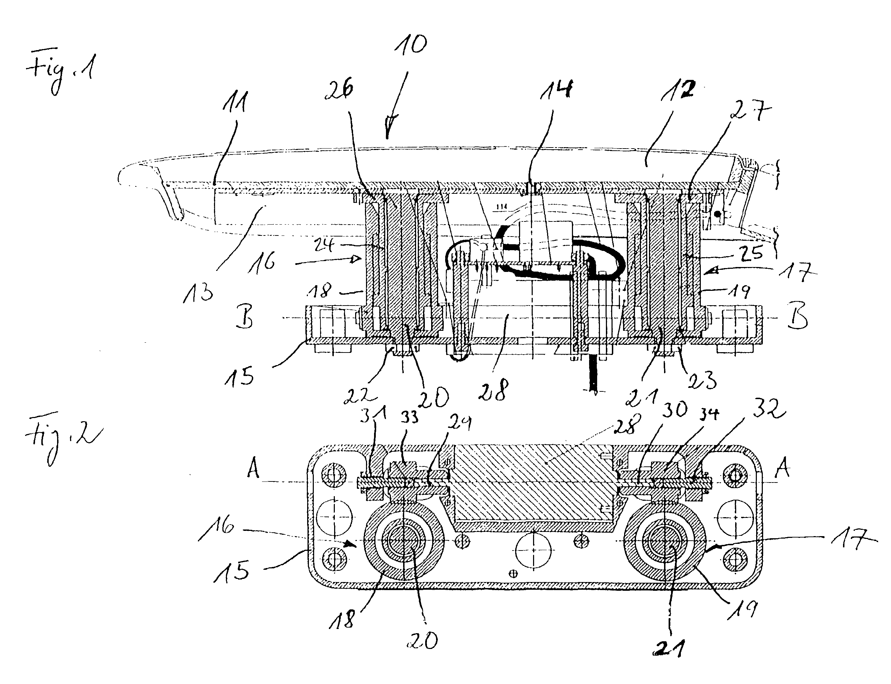

In Fig. 1 ist eine Armauflage allgemein mit der Bezugsziffer 10 bezeichnet. Die Armauflage 10 besteht aus einer Grundplatte 11, bevorzugt aus Metallblech, die mit einem Überzug 12 abgedeckt ist, beispielsweise Stoff, Leder oder Kunststoff, und optional mit einem Polstermaterial unterlegt ist. Selbstverständlich kann die Grundplatte 11 ebenso als ein Kunststoff-Formteil ausgebildet sein, an der beispielsweise ein Polstermaterial aus weicherem Schaum als das Grundmaterial direkt mit angeformt sein kann. Auf der Unterseite der Grundplatte 11 ist eine im Querschnitt U-förmige Verbindungsplatte 13 vorgesehen und mit dieser beispielsweise durch Schweißen oder mittels Nieten fest verbunden ist, von denen eine Niete mit der Bezugsziffer 14 bezeichnet ist.

Die Armauflage 10 ist über eine im folgenden näher erläuterte Hubeinrichtung auf einer Tragplatte 15 mit einem umlaufend hochstehenden Rand angeordnet. Die Tragplatte 15 hat mehrere Bohrungen, mit welcher sie fest mit einer Unterlage verbindbar ist, beispielsweise mit einer bodenfesten Stütze im Bodenbereich an der Fahrzeugkarosserie oder einer Konsole, beispielsweise zwischen zwei nebeneinander angeordneten Sitzen. Die Tragplatte 15 kann auch direkt mit dem Rahmen oder Sitzteil des Sitzes oder mit einem Teil einer Fahrzeugtür oder einer Fahrzeugseitenwand verbunden sein. Schließlich ist auch eine Verwendung bei Sitzmöbeln im Wohn- oder Bürobereich denkbar.

Die vorstehend angesprochene Hubeinrichtung umfaßt zwei in Längsrichtung der Armauflage 10 voneinander beabstandete identisch ausgebildete Hubmittel in Gestalt von ein- und ausfahrbaren Teleskopspindeln 16 und 17. Die Teleskopspindeln 16, 17 umfassen ein becherförmiges Außenteil 18, 19, welches sich axial nahezu über die gesamte Länge der Teleskopspindel 16, 17 erstreckt und fest mit einem wellenförmigen Zentralteil 20, 21 mit Außengewinde verbunden ist, das eine jeweilige Lagerbohrung in der Tragplatte 15 durchsetzt und in dieser gegen eine axiale Verschiebung mittels eines Spannrings 22, 23 festgesetzt ist. Das Außengewinde des jeweiligen Zentralteils 20, 21 steht im Kämmeingriff mit einem Innengewinde eines buchsenförmigen Zwischenteils 24, 25, das am oberen Ende radial flanschförmig erweitert und über diesen Flansch 26, 27 fest mit der Verbindungsplatte 13 und damit mit der Armauflage 10 verbunden ist. Eine Drehung des Außenteils 18, 19 wird deshalb über das Zentralteil 20, 21 auf das Zwischenteil 24, 25 übertragen, wodurch dieses in bezug auf das Außenteil 18, 19 je nach Drehrichtung ein- oder ausgefahren wird. Diese Hubverstellung erfolgt mittels eines elektrischen Antriebsmotors 28, der für beide Teleskopspindeln 16, 17 eine gemeinsame Antriebsquelle bildet, zwischen diesen Spindeln angeordnet und fest mit der Tragplatte 15 verbunden ist.

Der Antriebsmotor 28 ist liegend angeordnet und hat Antriebswellen 29 bzw. 30, die an beiden Stirnseiten aus dem Motorgehäuse vorstehen. Die Enden der beiden Antriebswellen 29, 30 stehen unter Zwischenschaltung einer Kugel unter Druckkontakt mit Lagerwellen 31 bzw. 32, die in Halterungsstegen mittels eines Drucklagers gelagert sind. Die Halterungsstege sind mit der Tragplatte 15 einstückig gebildet. Eine Antriebsschnecke 33, 34 sitzt jeweils drehfest auf dem Ende der Antriebswelle 29, 30 und der Lagerwelle 31, 32 und die Antriebsschnecke 33, 34 steht im Kämmeingriff mit einem Außengewinde im unteren Bereich des Außenteils 18, 19 der Teleskopspindel 16, 17. Auf diese Weise werden die Teleskopspindeln 16, 17 synchron durch den Antriebsmotor 28 angetrieben.

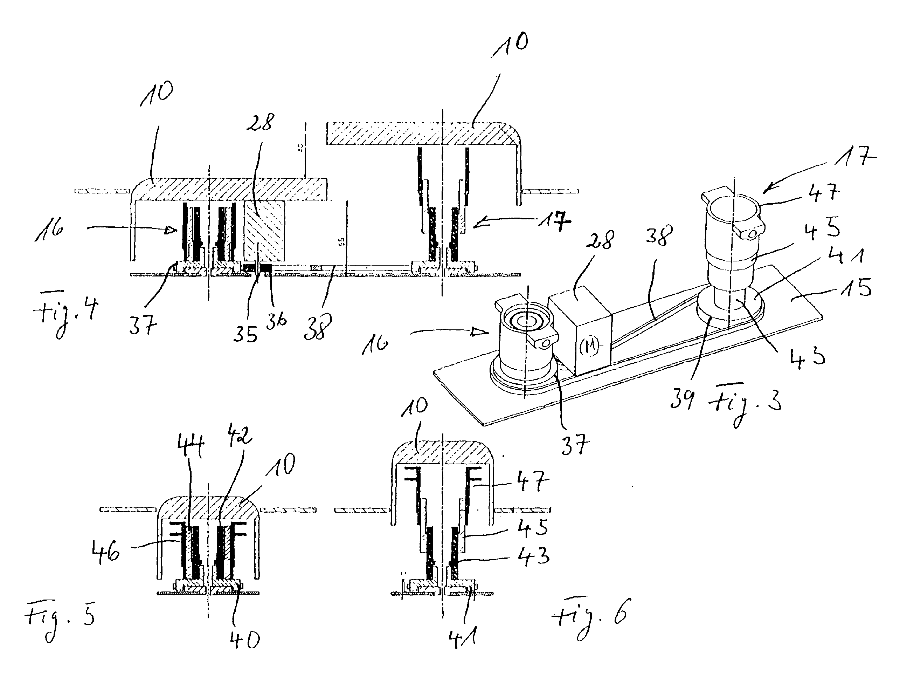

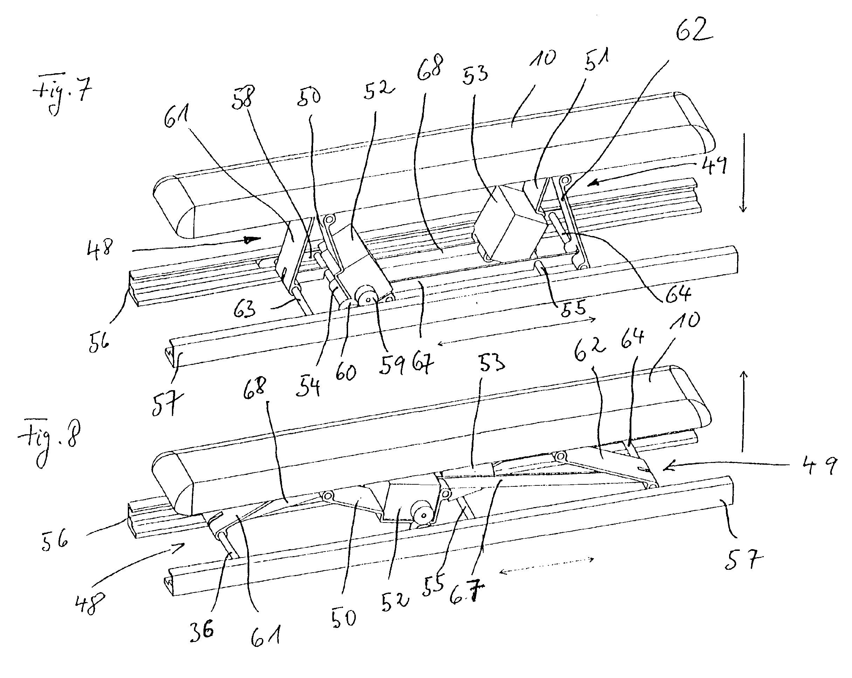

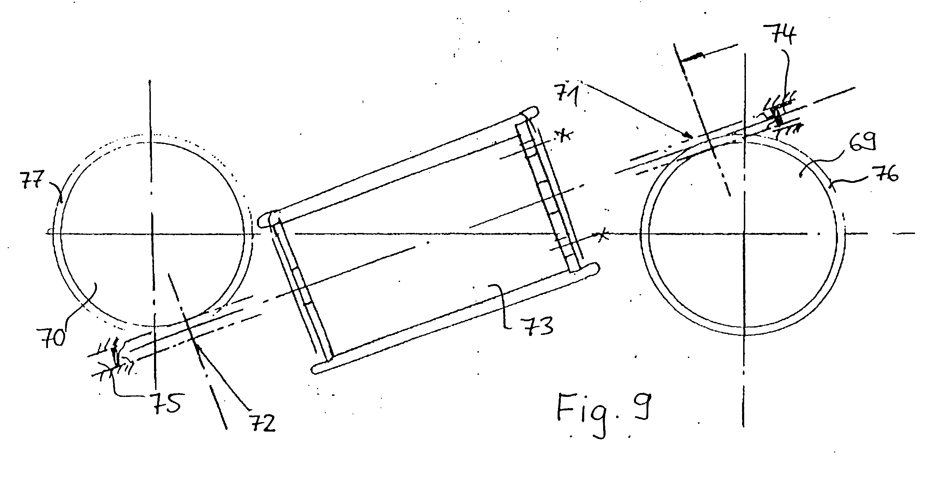

Eine Alternative der in Fig. 1 und 2 gezeigten Hubeinrichtung ist in Fig. 3 bis 6 schematisch gezeigt, wobei für dieselben Teile dieselben Bezugsziffern verwendet sind, und wobei im folgenden ausschließlich diejenigen konstruktiven Merkmale erläutert werden, in welchen sich diese zweite Ausführungsform von der ersten in Fig. 1 und 2 gezeigten Ausführungsform unterscheidet.

Demnach ist der Antriebsmotor 28 nicht mittig zwischen den beiden Teleskopspindeln 16, 17 und nicht liegend sondern stehend in unmittelbarer Nachbarschaft der einen Teleskopspindel 16 angeordnet. Die an einem Ende vom Gehäuse des Motors 28 vorstehende Antriebswelle 35 ist in einer Ausnehmung der Tragplatte 15 gelagert. Mit der Antriebswelle 35 ist ein Antriebsritzel bzw. Antriebszahnrad 36 fest verbunden, welches mit einem Außengewinde eines Antriebselements der Teleskopspindel 16 im Kämmeingriff steht. Um dieses Außengewinde 37 ist ein Zahnriemen 38 mit seiner Zahnseite geführt, und dieser Zahnriemen 38 läuft außerdem um das Antriebselement der anderen Teleskopspindel 17 und steht mit seiner Zahnseite im Kämmeingriff mit einem Außengewinde 39 dieses Elements.

Damit wird die Teleskopspindel 16 direkt über die Antriebswelle 35 vom Antriebsmotor 28 angetrieben, während die Teleskopspindel 17 mittelbar über den Zahnriemen 38 in Drehung versetzt wird. Aufgrund dieser Anordnung sind die beiden Drehspindeln 16 und 17 miteinander derart gekoppelt, daß sie synchron teleskopierend verstellt werden und eine Hubverstellung der Armauflage 10 bewirken.

Die Teleskopspindeln 16, 17 der in Fig. 3 bis 6 gezeigten Ausführungsform haben jeweils ein kreisförmiges Basisteil 40, 41 mit Außengewinde, welches Basisteil das Antriebselement für die Teleskopspindel 16, 17 bildet, das im Kämmeingriff mit dem Zahnriemen 38 steht. Ein rohrförmiges Zentralteil 42, 43 ist fest mit dem Basisteil 40, 41 verbunden und steht von diesem nach oben vor. Das Zentralteil 42, 43 hat ein Außengewinde, das im Eingriff mit einem Innengewinde eines Zwischenteils 44, 45 steht. Das Zwischenteil 44, 45 ist ebenfalls rohrförmig gebildet und weist ein Außengewinde auf, welches im Eingriff mit einem Innengewinde eines rohrförmigen Außenteils 46, 47 steht. Das rohrförmige Außenteils 46, 47 steht über ein flanschförmig in radialer Richtung vorstehendes oberes Ende im Eingriff mit der Innenseite der Armauflage 10, um diese anzuheben bzw. abzusenken. Das Basisteil 40, 41 ist auf der Tragplatte 15 mit Hilfe einer fest mit dieser verbundenen Kreisscheibe drehbar gelagert.

Eine weitere Ausführungsform einer Hubeinrichtung für eine Sitz-Armauflage ist in Fig. 7 und 8 gezeigt. Anstelle von zwei Teleskopspindeln hat diese Hubeinrichtung zwei Hebelmechanismen zur Hubverstellung der Armauflage 10. Die beiden Hebelmechanismen 48, 49 sind in bezug auf die Armauflage 10 in ähnlicher Weise angeordnet wie die Teleskopspindeln gemäß der vorstehend erläuterten Ausführungsformen der Hubeinrichtung, d.h. in Längserstreckungsrichtung der Armauflage 10 voneinander beabstandet.

Jeder Hebelmechanismus 48, 49 umfaßt einen Stellhebel 50, 51. Der Stellhebel 50 ist mit seinem Ende schwenkbar an der Unterseite der Armauflage 10 angelenkt, während der andere Stellhebel 51 längsverschiebbar in der Unterseite der Armauflage 10 gelagert ist. Das andere Ende jedes Stellhebels 50, 51 ist fest mit einer Achse 54, 55 verbunden, die ihrerseits Teil eines Schlittens mit Gleitschuhen bildet, die in Führungsnuten von Führungschienen 56, 57 gleitverschiebbar gelagert sind. Von diesen Gleitschuhen ist in Fig. 7 lediglich der eine Gleitschuh 58 zu erkennen, der in der Führungsschiene 56 läuft und zur Achse 54 gehört. Außerdem ist pro Stellhebel ein Antriebsmotor 52, 53 vorgesehen, der fest mit dem Stellhebel 50, 51 verbunden ist, und dessen Antriebswelle über ein Ritzel im Kämmeingriff mit einem Zahnrad steht, das fest mit der Achse 54, 55 verbunden ist. In Fig. 7 ist lediglich das Ritzel 59 des Motors 52 und das mit ihm zusammenwirkende Zahnrad 60 zu erkennen. Aufgrund dieser Anordnung führt eine Betätigung des Antriebsmotors 52, 53 zu einer Schwenkverstellung des Stellhebels 50, 51 um die Achse 54, 55. Diese Schwenkverstellungen erfolgen für die beiden Hebelmechanismen 48, 49 synchron, so daß diese Schwenkverstellung zu einer Hubverstellung der Armauflage 10 führt.

Jeder Hebelmechanismus 48, 49 umfaßt außerdem einen Stützhebel 61, 62. Der eine Stützhebel 61 ist mit seinem oberen Ende gleitend in der Unterseite der Armauflage 10 geführt, während der andere Stützhebel 62 mit seinem oberen Ende schwenkbar mit der Armauflage 10 verbunden ist. Das untere Ende jedes Stützhebels 61, 62 ist schwenkbar mit einer Achse 63, 64 verbunden, die Teil eines weiteren Schlitten bildet, der außerdem Gleitschuhe umfaßt, die wiederum in Führungsnuten der Führungsschienen 56, 57 laufen. Von diesen Gleitschuhen sind in Fig. 7 der eine Gleitschuh 65 der Achse 63 und der eine Gleitschuh 66 der Achse 64 zu erkennen.

In der in Fig. 8 gezeigten abgesenkten Position der Armauflage 10 befindet sich das oben liegende Ende des Stützhebels 61 im Eingriff mit einem Anschlag auf der Unterseite der Armauflage 10, wodurch diese mechanisch in der abgesenkten Position über den Stützhebel 61 abgestützt ist.

Außerdem sind zur Sicherung der angehobenen Position der Armauflage 10 stangenförmige Riegel 67, 68 vorgesehen, von denen der eine Riegel 67 schwenkbar mit dem Gehäuse des Antriebsmotors 52 und dadurch mit dem Stellhebel 50 verbunden ist, während der andere Riegel 68 schwenkbar mit dem Antriebsmotor 53 und damit mit dem anderen Stellhebel 51 verbunden ist. Mit dem jeweils anderen Ende sind die Riegel 67, 68 mit der Achse 63 bzw. 64 schwenkbar verbunden. Jeder Riegel 67, 68 weist außerdem eine Kerbe bzw. Eintiefung auf, die bei sich in maximal angehobener Stellung befindlicher Armauflage 10 die Achse 54 bzw. 68 übergreift, wodurch die Hebelmechanismen 48, 49 lösbar verriegelt sind. Diese Verriegelungsstellung wird dadurch aufgehoben, daß die Antriebsmotoren 52, 53 betätigt werden, was zu einer Verschwenkung der Riegel 67, 68 führt, wodurch diese mit ihren Kerben von den Achsen 54, 55 freikommen.

Alternativ zu der in Fig. 7 und 8 gezeigten Ausführungsform können beide Stellhebel 50, 51 schwenkbar und beide Stützhebel 61, 62 gleitverschiebbar mit der Armauflage 10 verbunden sein und dort jeweils mit Anschlägen zusammenwirken, um die abgesenkte Position der Armauflage zu stabilisieren und dadurch die Hebelmechanismen bzw. die Antriebsmotoren von einer Belastung der Armauflage 10 zu entkoppeln.

Der in Fig. 7 und 8 gezeigte Hebelmechanismus 48, 49 kann auch so gestaltet sein, daß bei asynchroner Betätigung der Antriebsmotoren die Armauflage nicht nur angehoben und abgesenkt, sondern auch geneigt eingestellt werden kann. Bei den in Fig. 1 bis 6 gezeigten Ausführungsformen kann eine Neigung der Armauflage 10 beispielsweise durch eine Neigungsverstellung der Tragplatte 15, bevorzugt ebenfalls motorbetätigt vorgenommen werden. In ähnlicher Weise kann eine Verschiebung der Armauflage 10 in Längsrichtung durch eine Längsverschiebung der Tragplatte 15 oder dergleichen erzielt werden. Auch eine Verstellung der Neigung quer zur Verschieberichtung ist mit einer zusätzlichen Antriebsvorrichtung oder einer abgeleiteten, gekoppelten Getriebeübertragung vom Hauptantrieb erreichbar.

Fig. 9 zeigt eine weitere Alternative einer Hubeinrichtung, bei der ein einziger Elektromotor 73, ähnlich wie bei der Fig. 2, zwischen zwei beabstandeten Hubeinrichtungen, die hier als Hubzylinder 69 bzw. 70 ausgebildet sind, angeordnet ist. Aus dem Elektromotor 73 treten zu beiden Stirnseiten Antriebsschnecken 71 bzw. 72 aus, von denen die Schnecke 71 beispielsweise linkssteigend ausgelegt ist und mit einer Außenverzahnung 76 des Hubzylinders 69 im Eingriff steht und von von denen die Schnecke 72 beispielsweise rechtssteigend ausgelegt ist und mit einer Außenverzahnung 77 des Hubzylinders 70 im Eingriff steht. Die Längsachse des Elektromotors 73 ist im Gegensatz zur Fig. 2 hier auf einer diagonalen Tangente an die Außenverzahnungen 76 und 77 der Hubzylinder 69 bzw. 70 angeordnet. Durch die gegenläufige Anordnung der Steigung der Schnecken 71 und 72 und den Eingriff auf unterschiedlichen Seiten der Hubzylinder werden beide Hubzylinder beim Antrieb durch den Elektromotor 73 in derselben Drehrichtung bewegt. Bei einer gleichen Steigung der Schnecken 71 und 72 wird somit ein synchroner Lauf beider Hubzylinder bewirkt; mittels einer unterschiedlichen Steigung der Schnecken oder einer unterschiedlichen Übersetzung in den Außenverzahnungen oder den Hubzylindern kann ein asynchroner Lauf beider Hubzylinder erreicht werden, so daß einer Höhenverstellung einer Armstütze auch gleichzeitig eine Veränderung der Neigung überlagert werden kann. Die freien Enden beider Schnecken 71, 72 sind in Schneckenlagern 74 und 75 radial und optional auch zumindest an einem Ende axial gelagert.

Prinzipiell können auch andere als die vorstehend beschriebenen Systeme als Hubeinrichtungen in Frage kommen. Beispielsweise sind auch pneumatische oder hydraulische Antriebe ebenso denkbar, wie unmittelbar wirkende Linear- oder Schrittschaltmotoren.

### Bezugszeichenliste

- 10: Armauflage
- 11: Grundplatte
- 12: Abdeckung
- 13: Verbindungsplatte
- 14: Niete
- 15: Tragplatte
- 16: Teleskopspindel
- 17: Teleskopspindel
- 18: Außenteil
- 19: Außenteil
- 20: Zentralteil
- 21: Zentralteil
- 22: Spannscheibe
- 23: Spannscheibe
- 24: Zwischenteil
- 25: Zwischenteil
- 26: Flansch
- 27: Flansch
- 28: Antriebsmotor
- 29: Antriebswellenende
- 30: Antriebswellenende
- 31: Lagerwelle
- 32: Lagerwelle 6
- 33: Antriebsschnecke 7
- 34: Antriebsschnecke 7
- 35: Antriebswelle 72
- 36: Antriebszahnrad 73
- 37: Außengewinde 74
- 38: Zahnriemen 75
- 39: Außengewinde 76
- 40: Basisteil 77
- 41: Basisteil
- 42: Zentralteil
- 43: Zentralteil
- 44: Zwischenteil
- 45: Zwischenteil
- 46: Außenteil
- 47: Außenteil
- 48: Hebelmechanismus
- 49: Hebelmechanismus
- 50: Stellhebel
- 51: Stellhebel
- 52: Antriebsmotor
- 53: Antriebsmotor
- 54: Achse
- 55: Achse
- 56: Führungsschiene
- 57: Führungsschiene
- 58: Gleitschuh
- 59: Ritzel
- 60: Zahnrad
- 61: Stützhebel
- 62: Stützhebel
- 63: Achse
- 64: Achse
- 65: Gleitschuh
- 66: Gleitschuh
- 67: Riegel
- 68: Riegel
- 69: Hubzylinder
- 70: Hubzylinder
- 71: Schnecke, rechtssteigend
- 72: Schnecke, linkssteigend
- 73: Elektromotor
- 74: Schneckenlager
- 75: Schneckenlager
- 76: Außenverzahnung (an 69)
- 77: Außenverzahnung (an 70)

## Patentansprüche

1. Armauflage für einen Sitz, insbesondere Fahrzeugsitz, die seitlich an einem Sitzteil oder an einem benachbarten Fahrzeugteil angeordnet ist, **gekennzeichnet durch** eine motorisch betätigbare Verstelleinrichtung (16, 17, 48, 49, 69, 70) zur Veränderung der Position der Armauflage (10) relativ zum Sitzteil oder Fahrzeugteil.

2. Armauflage nach Anspruch 1, **dadurch gekennzeichnet,** daß die Verstelleinrichtung als Hubeinrichtung wirkt, die die Höhe der Armauflage verändert.

3. Armauflage nach Anspruch 1 oder 2, **dadurch gekennzeichnet,** daß die Verstelleinrichtung als Hubeinrichtung wirkt, die die Neigung der Armauflage verändert.

4. Armauflage nach einem der Ansprüche 1 bis 3, **dadurch gekennzeichnet,** daß die Verstelleinrichtung als Hubeinrichtung wirkt, die den seitlichen Abstand der Armauflage zum Sitzteil verändert.

5. Armauflage nach Anspruch 1, **dadurch gekennzeichnet,** daß die Hubeinrichtung (16, 17, 48, 49, 69, 70) zwei in Längserstreckungsrichtung der Armauflage (10) beabstandete Hubmittel umfaßt.

6. Armauflage nach Anspruch 5, **dadurch gekennzeichnet,** daß beide Hubmittel (16, 17, 48, 49, 69, 70) zur Aufrechterhaltung der Neigung der Armauflage (10) synchron angetrieben sind.

7. Armauflage nach Anspruch 5, dadurch **gekennzeichnet,** daß eine beide Hubmittel (16, 17, 48, 49, 69, 70) tragende Basis (15) zur Verstellung der Neigung der Armauflage (10) durch einen eigenen Antrieb neigungsverstellbar ist.

8. Armauflage nach Anspruch 5, **dadurch gekennzeichnet,** daß beide Hubmittel (16, 17, 48, 49, 69, 70) zur Verstellung der Neigung der Armauflage (10) asynchron angetrieben sind.

9. Armauflage nach Anspruch 5, **dadurch gekennzeichnet,** daß beiden Hubmitteln (16, 17, 69, 70) ein gemeinsamer Antriebsmotor (28, 73) zugeordnet ist.

10. Armauflage nach Anspruch 5, **dadurch gekennzeichnet,** daß jedem Hubmittel (48, 49) ein eigener Antriebsmotor (52, 53) zugeordnet ist.

11. Armauflage nach einem der Ansprüche 5 bis 10, **dadurch gekennzeichnet,** daß die Hubmittel als durch Drehverstellung ein- und ausfahrbare Teleskopspindeln (16, 17) bzw. Hubzylinder (69, 70) ausgelegt sind.

12. Armauflage nach Anspruch 11, **dadurch gekennzeichnet,** daß ein gemeinsamer Antriebsmotor (28) für die beiden Teleskopspindeln (16, 17) bzw. für zwei Hubzylinder (69, 70) zwischen diesen angeordnet ist und diese über jeweils eine Schnecke (33, 34, 71, 72) antreibt, die mit einem außenverzahnten Antriebsrad (18, 19, 40, 41) der entsprechenden Teleskopspindel bzw. einer Außenverzahnung (76, 77) des Hubzylinders (69,70) kämmt.

13. Armauflage nach Anspruch 11, **dadurch gekennzeichnet,** daß ein gemeinsamer Antriebsmotor (28) für die beiden Teleskopspindeln (16, 17) zwischen diesen angeordnet ist und diese über einen Zahnriemen antreibt, der mit außenverzahnten Antriebsrädern der beiden Teleskopspindeln kämmt.

14. Armauflage nach Anspruch 11, **dadurch gekennzeichnet,** daß ein gemeinsamer Antriebsmotor (28) für die beiden Teleskopspindeln (16, 17) zwischen diesen angeordnet ist und eine der Teleskopspindeln (17) über einen Zahnriemen (38) antreibt, der mit einem außenverzahnten Antriebsrad (41) dieser Teleskopspindel (17) kämmt, während er die andere Teleskopspindel (16) über eine Schnecke bzw. ein Zahnrad (36) antreibt, die bzw. das mit einem außenverzahnten Antriebsrad (40) dieser Teleskopspindel (16) kämmt.

15. Armauflage nach einem der Ansprüche 5 bis 14, **dadurch gekennzeichnet,** daß die Hubmittel jeweils einen motorbetätigten Hebelmechanismus (48, 49) aufweisen, der in minimaler und maximaler Hubposition mechanisch verriegelt und motorbetätigt aus der jeweiligen Verriegelungsposition frei kommt.

16. Armauflage nach Anspruch 15, **dadurch gekennzeichnet,** daß jeder Hebelmechanismus (48, 49) einen Stellhebel (50, 51) umfaßt, der mit einem Ende an der Unterseite der Armauflage (10) und mit dem anderen Ende über einen Antriebsmotor (52, 53) an einem Schlitten (54, 55, 58) drehbar angelenkt ist, der in einer parallel zur Armauflage (10) verlaufenden Führungsschiene (56, 57) geführt ist, daß jeder Hebelmechanismus (48, 49) ferner einen Stützhebel (61, 62) umfaßt, der mit einem Ende an der Armauflage (10) in der Längserstreckungsrichtung verschiebbar und mit dem anderen Ende an einem weiteren in der Führungsschiene geführten Schlitten (63, 64, 65) drehbar angelenkt ist, daß darüber hinaus Riegel (67, 68) vorgesehen sind, die schwenkbar mit den Stellhebeln (50, 51) der beiden Hebelmechanismen (48, 49) verbunden sind und die Stellhebel (50. 51) in der maximalen Hubposition an ihren Schlitten festsetzen, und daß in der Armauflage (10) Anschläge vorgesehen sind, an welchen sich die Stützhebel (61, 62) in der minimalen Hubposition abstützen.
